# EUROPÄISCHE PATENTSCHRIFT

(11) **EP 3 693 981 B1**
(45) Veröffentlichungstag und Bekanntmachung des Hinweises auf die Patenterteilung: **07.06.2023**
(21) Anmeldenummer: 20150406.5
(22) Anmeldetag: 07.01.2020
(51) Int. Cl.: H01F 27/10, H01F 27/16, H01F 27/23, H01F 27/28, H01F 38/08

(54) **TRANSFORMATORANORDNUNG ZUM WIDERSTANDSSCHWEISSEN**
TRANSFORMER ASSEMBLY FOR RESISTANCE WELDING
SYSTEME DE TRANSFORMATEUR DESTINÉ AU SOUDAGE PAR RÉSISTANCE

(30) Priorität: 08.02.2019 DE 102019201631; 18.03.2019 DE 102019203603
(43) Veröffentlichungstag der Anmeldung: 12.08.2020
(73) Patentinhaber: Robert Bosch GmbH, 70442 Stuttgart (DE)
(72) Erfinder: Kocar, Matej, 1231 Ljubljana (SI); Solar, Anton, SI-4228 Zelezniki (SI); Cernivec, Gregor, 1218 Komenda (SI); Rihtarsic, Damjan, 4245 Kropa (SI); Klopcic, Beno, 1231 Ljubljana (SI)

(56) Entgegenhaltungen:
- CN-A- 102 143 674
- DE-A1-102007 001 234
- US-A- 4 114 017
- US-A1- 2010 277 869
- MICHAEL A. GREEN: "Use of Aluminum Coils Instead of Copper Coils in Accelerator Magnet Systems", IEEE TRANSACTIONS ON NUCLEAR SCIENCE., Bd. 14, Nr. 3, 1. Juni 1967 (1967-06-01), Seiten 398-404, XP055699609, US ISSN: 0018-9499, DOI: 10.1109/TNS.1967.4324589

## Beschreibung

Die vorliegende Erfindung betrifft eine Transformatoranordnung mit einem stromleitenden Bauteil, welches in einem Transformator als stromleitender Bestandteil zumindest einer Spulenwindung zumindest der Sekundärwicklung angeordnet ist.

### Stand der Technik

Im Zuge des sogenannten Widerstandsschweißens oder Punktschweißens werden Werkstücke stoffschlüssig miteinander verbunden, wobei Schweißelektroden mit einer Elektrodenkraft gegen die zu verschweißenden Werkstücke gepresst werden. Die Schweißelektroden werden für die Dauer einer Stromzeit von einem Schweißstrom durchflossen. Durch eine Widerstandserwärmung der beiden zu verschweißenden Werkstücke an dem Schweißpunkt zwischen den Schweißelektroden werden die zu verbindenden Werkstücke bis zum Erreichen einer erforderlichen Schweißtemperatur erhitzt und bilden dabei eine Schmelze aus.

Ein Schweißtransformator hat dabei die Aufgabe, die Netzspannung oder eine Ansteuerspannung auf eine niedrigere Sekundärspannung herabzusetzen, um den Schweißstrom auf eine Stromstärke von mehreren tausend Ampere zu erhöhen. Der Transformator induziert in seiner Sekundärwicklung eine niedrige Wechselspannung in der Größenordnung von ca. 10 Volt, welche anschließend gleichgerichtet wird. Über die Schweißelektroden und die zu verschweißenden Werkstücke fließt ein hoher Strom in der Größenordnung von 7 bis zu 50 kA, der für den Schweißvorgang verwendet wird.

Widerstandschweißgeräte für die industrielle Fertigung, zum Beispiel im Automobilbau, sind typischerweise mit einer Punktschweißzange als Schweißwerkzeug nach Art einer Trafozange ausgerüstet. Namensgeber für diese Bauform ist das Merkmal, dass der Schweißtransformator ein Bestandteil der Schweißzange ist. Vorteilhaft an dieser Bauform ist, dass der Schweißtransformator nahe an die Schweißelektroden rückt. Damit werden insbesondere parasitäre Induktivitäten zwischen Schweißtransformator und Schweißelektroden minimiert, um die Stromanstiegszeiten zu optimieren. Nachteilig an dieser Bauform ist die höhere Masse der Trafozange aufgrund der Zusatzmasse des integrierten Schweißtransformators. Die Trafozange wird bekanntermaßen durch einen Schweißroboter im Raum geführt und mittels eines elektrischen, pneumatischen oder hydraulischen Antriebs geschlossen bzw. geöffnet. Aufgrund geforderter, immer kürzerer Taktzyklen, insbesondere bei der Karosseriefertigung im Automobilbau soll die Bewegung der Trafozange durch den Schweißroboter sowie die Schließbewegung hochdynamisch erfolgen. Dafür ist es notwendig, dass die Massenträgheit des Roboters, insbesondere die Trägheit der Trafozange, möglichst gering ist. Schweißwerkzeuge sind auf eine geringe Masse bei hoher Festigkeit optimiert. Es besteht kaum noch Optimierungspotential. Von erheblichen Vorteil ist es aus diesem Grund die Masse des Schweißtransformators der Trafozange zu reduzieren. Schweißtransformatoren werden als MF (MF steht hier für Mittelfrequenz) -Transformatoren mit einer Frequenz im Bereich um 1000 Hz betrieben. Es hat sich erwiesen, dass bei einer PWM-Ansteuerung mit einer Inverter-Frequenz im Bereich um 1000 Hz die Leistungsdichte des Schweißtransformators, also das Verhältnis aus Nutzleistung zu Bauvolumen des Schweißtransformators optimal ist. Sowohl bei niedrigeren als auch höheren Frequenzen erhöht sich die Verlustleistung. Die Verlustleistung wird verursacht durch die ohmschen Verluste der leitenden Bauteile, die Magnetisierungsverluste im Kern des Transformators, Wirbelströme und durch Spannungsabfälle bzw. Schaltverluste in den Halbleiterschaltelementen oder Gleichrichterdioden des Schweißtransformators.

Die Verlustleistung eines Schweißtransformators ist dennoch immens und muss geeignet abgeführt werden. Aufgrund der hohen Leistungsdichte und des begrenzten Bauraumes für den Schweißtransformator werden Schweißtransformatoren fluidgekühlt, wie beispielsweise in der DE 10 2007 001 234 A1 beschrieben. Wünschenswert ist eine weitere Reduzierung der Masse des Schweißtransformators. Dies kann jedoch nur noch durch Einsatz geeigneter Materialien mit einer geringeren Dichte erzielt werden. Die gewichtsbestimmenden Faktoren eines Schweißtransformators sind seine stromleitenden Teile. Unter den stromleitenden Teilen des Schweißtransformators werden im Rahmen dieser Anmeldung die Primärwicklung(en), die Sekundärwicklung(en), die Kontaktplatten und die Anschlusselemente für die Gleichrichterdioden der Gleichrichterbaugruppe, sowie die massiven elektrischen Anschlussplatten für Plus und Minuspol der Ausgangsspannung verstanden. Unter den nicht stromleitenden Teilen des Schweißtransformators werden im Rahmen dieser Anmeldung der aus magnetisch leitendem Material bestehende Kern, die Halbleiterschaltelemente oder Gleichrichterdioden und das Gehäuse des Transformators verstanden.

Die Schrift DE 10 2010 045 079 A1 beschreibt einen Transformator für eine Schweißzange eines Widerstandsschweißgerätes mit Primärwicklung, Sekundärwicklung und Kern. Ein Block aus leitfähigem Werkstoff ist zur Bildung der Sekundärwicklung vorgesehen. Der Block weist eine Ausnehmung und/oder Vertiefung zur Aufnahme der Primärwicklung auf. Der Block ist so ausgebildet, dass er zugleich die Sekundärwicklung bildet. Es wird vorgeschlagen den Block aus Aluminium oder einer Aluminiumlegierung zu fertigen. Der Block ist mit Kühlkanälen, insbesondere für eine Wasserkühlung versehen. Die Kühlkanäle können durch Fräsen oder Bohren in den Block eingearbeitet sein. Aluminium weist die viertbeste elektrische und thermische Leitfähigkeit aller Metalle auf. Nur Silber, Kupfer und Gold weisen eine höhere spezifische Leitfähigkeit auf. Zwar übertrifft Aluminium in dieser Hinsicht nicht das Leitvermögen von Kupfer, ist aber wesentlich leichter und preiswerter. Bei identischem elektrischen Widerstand eines Leiters aus Kupfer und eines Leiters aus Aluminium bei gleicher Länge ist der Querschnitt von Aluminium 1,6-fach größer als der Querschnitt von Kupfer. Der Aluminiumleiter wiegt dennoch nur die Hälfte.

In der DE 10 2007 001 234 A1 ist eine Transformatoranordnung beschrieben, bei der die stromleitenden Bauteile einen in ihrem Inneren ausgebildeten Hohlraum zum Aufnehmen eines Kühlfluids aufweisen. Die stromleitenden Bauteile haben insbesondere keine Beschichtung. Die stromleitenden Bauteile sind aus Kupfer oder Aluminium gebildet.

US 4,114,017 A zeigt keine Transformatoranordnung, sondern stattdessen eine Schweißzange die widerstandsfähig gegen Korrosion und leichtgewichtig ist. Die Zange hat einen Körper aus Aluminium und einen mobilen und einen feststehenden Arm aus Aluminium. In den Armen ist jeweils ein Kühlkanal mit einer Nickelbeschichtung ausgebildet. Am Ende des Körpers aus Aluminium ist eine Silberbeschichtung zum Sicherstellen eines guten elektrischen Kontakts zu einem herkömmlichen Anschlussverbinder vorhanden.

Aufgabe der vorliegenden Erfindung ist es, eine Transformatoranordnung mit einem Schweißtransformator geringer Masse und hoher Zuverlässigkeit anzugeben.

### Offenbarung der Erfindung

Die Aufgabe wird gelöst durch eine Transformatoranordnung mit einem stromleitendes Bauteil, welches in einem Transformator als stromleitender Bestandteil zumindest einer Spulenwindung einer Wicklung angeordnet ist, den Merkmalen des unabhängigen Anspruchs.

Obwohl die Erfindung nachfolgend im Wesentlichen unter Bezugnahme auf Widerstandsschweißtransformatoren beschrieben ist, ist sie nicht auf eine derartige Anwendung allein beschränkt.

Ein besagtes stromleitendes Bauteil wird, welches in einem Transformator als stromleitender Bestandteil zumindest einer Spulenwindung angeordnet ist, aus Aluminium oder einer Aluminiumlegierung gefertigt. Die zumindest eine Spulenwindung ist Bestandteil einer Sekundärwicklung des Transformators.

Das Bauteil besitzt einen in seinem Inneren ausgebildeten Hohlraum zum Aufnehmen eines Kühlfluids. Durch das Kühlfluid soll die Verlustleistung, deren Ursachen oben beschrieben wurden, aufgenommen und abgeführt werden. Vorgesehen ist weiterhin mindestens ein Mittel zum Schutz des Bauteils gegen Korrosion, insbesondere zum Schutz vor einer Korrosion durch das Kühlfluid.

Dadurch, dass das stromleitende Bauteil aus Aluminium oder einer Aluminiumlegierung gefertigt ist, hat es eine geringere Masse als ein baugleiches aus Kupfer hergestelltes stromleitendes Bauteil. Damit wird die Masse des Transformators verringert. Weiterhin ist Aluminium preislich günstiger, lässt sich einfacher bearbeiten und auch recyceln. Im Gegensatz zu Kupfer hat Aluminium jedoch einen geringeren spezifischen Leitwert, so dass sich bei gleichem Stromfluss höhere ohmsche Verluste ergeben. Bei einem Schweißtransformator, insbesondere bei einem MF-Transformator ist es nun jedoch so, dass durch induzierte Spannungen in allen leitenden Teilen Wirbelströme fließen, die den effektiven Querschnitt der leitenden Teile des Schweißtransformators reduzieren. Durch Einsatz eines erfindungsgemäßen Bauteils aus Aluminium oder einer Aluminiumlegierung verringern sich überraschenderweise die Wirbelströme aufgrund des geringeren spezifischen Leitwertes von Aluminium. Damit werden die Wirbelstromverluste gegenüber einem herkömmlichen leitenden Teil aus Kupfer reduziert. Den höheren ohmschen Verlusten eines Bauteils aus Aluminium stehen niedrigere Wirbelstromverluste gegenüber. Insgesamt ergeben sich somit beim Einsatz des erfindungsgemäßen Bauteils höhere Verluste im stromleitenden Bauteil, aber nicht im gleichen Verhältnis, wie der Leitwert von Kupfer bezogen auf den Leitwert von Aluminium steigt.

Durch Reaktion des metallischen Werkstoffes Aluminium oder einer Aluminiumlegierung mit seiner Umgebung erfolgt eine Korrosion. Da Aluminium kein Edelmetall ist, reagiert es bei Raumtemperatur mit Luft und Wasser zu Aluminiumoxid Al₂O₃. Das Aluminiumoxid bildet sofort eine dünne, für Luft und Wasser undurchlässige Schicht (Passivierung) und schützt so das Aluminium oder die Aluminiumlegierung vor weiterer Korrosion. Nach einigen Tagen erreicht diese Oxidschicht ihre größte Dicke, die, je nach der Luftfeuchtigkeit, bis zu einigen Tausendstel Millimetern betragen kann. Nachteilig ist, dass Al₂O₃ ein sehr guter Isolator ist und so die elektrischen Übergangswiderstände zwischen den stromleitenden Bauteilen zunehmen. Ein weiterer Nachteil ist, dass Aluminiumoxid eine schlechtere Wärmeleitfähigkeit hat und sich die Temperatur des stromleitenden Bauteils bei identisch abgeführter Verlustleistung erhöht.

Im Bereich des im Inneren ausgebildeten Hohlraums zum Aufnehmen eines Kühlfluids könnte sich trotz des Schutzes durch die Passivierung der Aluminiumoxidschicht Lochfraßkorrosion ausbilden. Damit werden Korrosionsstellen bzw. punktförmige Löcher in Oberflächen passivierter Metalle bezeichnet, die sich Trog förmig erheblich ausweiten. An Fehlstellen, der aus der Oxidschicht bestehenden Passivschicht aus Aluminiumoxid, tritt häufig eine punktförmige Korrosion auf. An diesen Fehlstellen wird aus der Aluminiumoxidschicht der Sauerstoff durch Chlorid bzw. Bromid Ionen verdrängt. Durch Anlagerung von weiteren Chlorid- und Bromid Ionen entsteht ein Bereich, der nicht mehr durch die Aluminiumoxidschicht geschützt ist. Das zunächst kleine Loch bildet die Anode, dir restliche Oberfläche die Kathode. Da die Korrosionsgeschwindigkeit durch das Flächenverhältnis von Kathode zu Anode bestimmt wird, schreitet die Reaktion mit großer Geschwindigkeit voran. Dieser Vorgang wird im Folgenden mit Elektrokorrosion bezeichnet.

Die Elektrokorrosion zerstört im Laufe der Zeit, im Bereich des ausgebildeten Hohlraums das stromleitende Bauteil, so dass sie Lebensdauer des Transformators erheblich verkürzen könnte. Durch Einsatz eines Mittels zum Schutz des Bauteils vor Korrosion, insbesondere zum Schutz vor einer Korrosion durch das Kühlfluid wird die Lebensdauer des stromleitenden Bauteils aus Aluminium im Vergleich zu einem stromleitenden Bauteil aus Kupfer nicht beeinträchtigt. Weiterhin wird dadurch dafür Sorge getragen, dass sich elektrische und thermische Übergangswiderstände gegenüber einem solchen Bauteil aus Kupfer nicht erhöhen.

Eine ausreichende Kühlung des Schweißtransformators, bestehend aus erfindungsgemäßen stromleitenden Bauteilen, bei erheblich geringerem Gewicht des Schweißtransformators, kann bei vergleichbarer Lebensdauer somit gewährleistet werden.

Vorteilhafte Ausgestaltungen der Erfindung sind Gegenstand der Unteransprüche.

Von besonderem Vorteil ist es, als Mittel zum Schutz des Bauteils vor Korrosion, insbesondere zum Schutz vor einer Korrosion durch das Kühlfluid, eine Schutzbeschichtung mindestens eines Teilabschnitts des Bauteils vorzusehen.

Besonders günstig ist es, den im Inneren des Bauteils ausgebildete Hohlraum, der der Aufnahme des Kühlfluids dient, zu beschichten. Durch die Schutzbeschichtung kann die Elektrokorrosion im Bereich des Hohlraumes besonders wirksam verhindert werden. Die Elektrokorrosion könnte sonst wie oben beschrieben im Laufe der Zeit im Bereich des ausgebildeten Hohlraums das stromleitende Bauteil zerstören.

Von besonderem Vorteil ist es, wenn die Schutzbeschichtung als eine chemische Nickelbeschichtung ausgeführt ist. Bei der chemischen Nickelbeschichtung wird kein äußerer elektrischer Strom verwendet. Dadurch erhält man beim chemischen Vernickeln konturentreue Beschichtungen. Eine chemische Nickelbeschichtung eignet sich besonders als Schutzschicht gegen Elektrokorrosion im Bereich des Hohlraums des Bauteils, aber auch als Schutzschicht gegen Korrosion durch Oxidation. Nickel hat als Metall im Gegensatz zu Aluminiumoxid einen höheren spezifischen elektrischen als auch einen höheren spezifischen thermischen Leitwert. Erfolgt die Beschichtung insbesondere unmittelbar nach Fertigung des stromleitenden Bauteils so bildet sich auf der Oberfläche des Bauteils keine Schicht aus Aluminiumoxid, es entstehen somit keine höheren elektrischen Übergangswiderstände zwischen den stromleitenden Teilen des Transformators und auch keine höheren thermischen Übergangswiderstände im Bereich der Kühlkanäle. Die Verlustleistung erhöht sich nicht, die ausreichende Kühlung des Transformators ist sichergestellt.

Denkbar ist auch eine Schutzbeschichtung, die als eine galvanische Beschichtung ausgeführt ist, hier insbesondere eine galvanische Nickelbeschichtung. Mit dieser Art der Beschichtung lässt sich vorwiegend an den äußeren Oberflächen des Bauteils eine Schutzschicht aufbauen.

Weiterhin denkbar ist auch eine Schutzbeschichtung, die als eine kathodische Tauchbeschichtung ausgeführt ist. Hier werden kolloidale Partikel unter Einfluss eines umweltfreundliche Methode, da als Lösungsmittel überwiegend demineralisiertes Wasser eingesetzt wird.

Von besonderem Vorteil ist es auch, die Schutzbeschichtung als eine Kunststoffbeschichtung auszuführen. Unter einer Kunststoffbeschichtung ist hier die Beschichtung des Bauteils mit Kunststoffen oder Sprüh- und Tauchlacken zu verstehen. Jedoch weist eine Kunststoffbeschichtung deutlich höhere Schichtdicken als die vorhergehenden Beschichtungen auf. Wie bei der chemischen Nickelbeschichtung ist mit einer Kunststoffbeschichtung auch eine Beschichtung der Hohlräume zur Aufnahme des Kühlfluids des Bauteils möglich.

Denkbar ist weiterhin die die Schutzbeschichtung als eine Passivierung des Aluminiums oder der Aluminiumlegierung, insbesondere durch eine Eloxierung auszuführen. Unter Eloxierung soll in diesem Zusammenhang die kontrollierte Erzeugung einer Schutzschicht durch Aluminiumoxid verstanden werden. Diese Schutzschicht wird durch anodische Oxidation gebildet. Die oberste Schicht des Aluminiums oder der Aluminiumlegierung des Bauteils wird umgewandelt und ein Oxid gebildet.

Insbesondere bei Schutzbeschichtungen mit denen keine Beschichtung der Hohlräume für die Aufnahme des Kühlfluids des stromleitenden Bauteils möglich ist, ist es vorteilhaft, wenn als weiteres Mittel zur Verhinderung der Elektrokorrosion ein Korrosionsinhibitor dem Kühlfluid zugesetzt wird. Der Korrosionsinhibitor kann aber auch zusätzlich zu einer vorhandenen Beschichtung der Hohlräume eingesetzt werden.

Umfasst der im Inneren des Bauteils ausgebildete Hohlraum Kanäle, insbesondere Bohrungen, die zur Durchströmung des Bauteils mit Kühlmittel vorgesehen sind, ist eine sehr gute Kühlung des elektrisch leitenden Bauteils und damit die Abführung der Verlustleistung gewährleistet.

Bei einer Transformatoranordnung, insbesondere bei einer Schweißtransformatoranordnung mit einer Primärwicklung und einer Sekundärwicklung und zum Beispiel mit Anschlussstücken, einer Gleichrichterbaugruppe und Anschlussplatten für die Pole ist es von besonderem Vorteil, wenn wenigstens eine Spulenwindung der Sekundärwicklung aus einem stromleitenden Bauteil aus Aluminium oder einer Aluminiumlegierung besteht und das stromleitende Bauteil einen in seinem Inneren ausgebildeten Hohlraum zum Aufnehmen eines Kühlfluids besitzt. Insbesondere lässt sich die gesamte Sekundärwicklung einfach und kostengünstig aus besagten stromleitenden Bauteilen aufbauen. Die Sekundärwicklung der Transformatoranordnung hat ein geringes Gewicht und lässt sich einfach und kostengünstig kühlen. Bei einem besonders vorteilhaften Schweißtransformator besteht die Sekundärwicklung aus nur zwei Windungen. Die Anschlussstücke dienen vorteilhafterweise als Trägerbauteile der zwei Windungen. Ein Trägerbauteil bildet die Mittelanzapfung der Sekundärwicklung, was nachfolgend an einem Ausführungsbeispiel näher beschrieben wird.

Eine weitere Gewichtsreduktion der Transformatoranordnung ist möglich, wenn auch die Anschlussstücke als Bauteile aus erfindungsgemäßen stromleitenden Bauteilen ausgeführt sind.

Denkbar ist es, auch die Windungen der Primärwicklung der Transformatoranordnung aus erfindungsgemäßen stromleitenden Bauteilen herzustellen. Da in der Primärwicklung ein wesentlich geringerer Primärstrom fließt, entsteht in der Primärwicklung nur eine geringe Verlustleistung und es kann auf eine Kühlung der Primärwicklung verzichtet werden. Allerdings könnten Kühlkanäle in den Primärwicklungen ggf. eine Kühlung der gesamten Transformatoranordnung verbessern. Durch Einsatz stromleitender Bauteile aus Aluminium oder einer Aluminiumlegierung auch für die Primärwicklung kann zumindest die Masse der Transformatoreinrichtung weiter reduziert werden.

Vorteilhaft ist es, auch die Anschlussplatten für die Pole der Ausgangsspannung aus erfindungsgemäßen stromleitenden Bauteilen zu fertigen. Das Gewicht des Transformators kann weiter reduziert werden.

Eine weitere Reduzierung des Gewichts der Transformatoranordnung ist möglich, wenn die Anschlusselemente der Gleichrichterbaugruppe als ein stromleitendes Bauteil ausgeführt sind. Da in den Gleichrichterdioden aufgrund des Spannungsabfalls über die Gleichrichterdioden und des hohen Stromes eine erhebliche Verlustwärme entsteht, ist auch hier die Kühlung des stromleitenden Bauteils besonders wichtig, insbesondere die weiter oben beschriebenen Mittel gegen Korrosion, insbesondere Elektrokorrosion.

Von besonderem Vorteil ist es, wenn die erfindungsgemäße Transformatoranordnung mit dem erfindungsgemäßen stromleitenden Bauteil als MF-Transformator ausgeführt ist, denn in diesem Fall steigen die elektrischen Verluste, die sich aufgrund der Wirbelströme in den elektrisch leitenden Bauteilen ergeben nicht proportional, sondern werden aufgrund der geringeren Leitfähigkeit von Aluminium gegenüber Kupfer teilweise kompensiert. Insgesamt ergeben sich somit beim Einsatz des erfindungsgemäßen Bauteils höhere Verluste im stromleitenden Bauteil, aber nicht im gleichen Verhältnis, wie der Leitwert von Kupfer bezogen auf den Leitwert von Aluminium steigt. Deshalb ist es besonders günstig , wenn die Frequenz der PWM-Ansteuerung der Primärwicklung durch den Inverter bis zu 5000 Hz beträgt. Der Effekt, dass der Einsatz von Aluminium die Wirbelströme hemmt, ist bei solch einer hohen Frequenz größer, da das Verhältnis zwischen Wirbelstromverlusten und ohmschen Verlusten im Vergleich zu Kuper günstiger ausfällt.

Wird solch eine erfindungsgemäße die Transformatoranordnung als Schweißtransformator, geeignet für das Widerstandsschweißen, eingesetzt ist das optimale Gleichgewicht aus Leistungsdichte bei ausreichender Kühlung und geringem Gewicht besonders vorteilhaft. Durch das geringere Gewicht des Schweißtransformators sind dynamischere Bewegungen der Schweißzange möglich. Die Positionierung der Schweißzange kann wesentlich schneller erfolgen, so dass die Schweißvorgänge schneller ausgeführt werden.

Gleichzeitig zeichnet sich die erfindungsgemäße Transformatoranordnung in jeder Ausbildung durch eine hohe Zuverlässigkeit und Standzeit aus.

### Ausführungsbeispiele

Die Erfindung wird nun anhand eines Ausführungsbeispiels mit Hilfe der beigefügten Figuren näher beschrieben:
Darin zeigen:
- Figur 1: einen elektrischen Schaltplan eines Ausführungsbeispiels eines erfindungsgemäßen Transformators,
- Figur 2: eine schematische Konstruktionsansicht einer bevorzugten Ausgestaltung eines erfindungsgemäßen Bauteils,
- Figur 3: eine bevorzugte Ausgestaltung eines erfindungsgemäßen Bauteils zur Verwendung mit einer Transformatoranordnung,
- Figur 4: eine bevorzugte Ausgestaltung einer Wicklungsanordnung einer erfindungsgemäßen Transformatoranordnung,
- Figur 5: eine bevorzugte Ausgestaltung einer Gleichrichterbaugruppe zur Verwendung mit einer erfindungsgemäßen Transformatoranordnung aus verschiedenen Ansichten und
- Figur 6: eine Explosionszeichnung einer erfindungsgemäßen einer erfindungsgemäßen Schweißtransformatoranordnung.

Identische Bezugszeichen in den Figuren bezeichnen gleiche oder baugleiche Elemente.

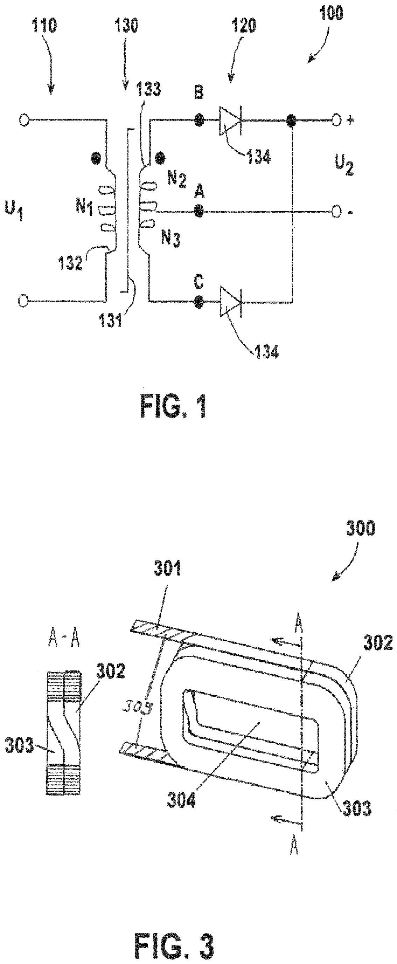

In Fig. 1 ist ein elektrisches Schaltbild einer Schweißtransformatoranordnung schematisch dargestellt und insgesamt mit 100 bezeichnet. Die Schweißtransformatoranordnung weißt einen Primärkreis 110 und einen Sekundärkreis 120 auf, die über einen Transformator 130 verbunden sind. Eine Primärwicklung 132 des Transformators 130 mit einer Windungszahl N₁ ist in den Primärkreis 110, eine Sekundärwicklung 133 des Transformators 130 mit einer Windungszahl N₂ + N₃ ist in den Sekundärkreis 120 geschaltet. Der Transformator 130 weist weiterhin einen Transformatorkern 131 auf. Der Primärkreis wird mit einer Primärspannung U₁ im Mittelfrequenzbereich betrieben. Der Transformatorkern 131 ist so ausgelegt, dass er bei der Mittelfrequenz im Bereich um 1000 Hz nicht in Sättigung geht.

Der Sekundärkreis 120 ist als Gleichrichteranordnung ausgebildet und stellt die Transformatorausgangsspannung U₂ bereit. Zu diesem Zweck weist die Sekundärwicklung 133 einen Mittelabgriff A auf, der mit dem negativen Ausgang (-) der Anordnung 100 verbunden ist. Ausgehend vom Mittelabgriff A ist die Sekundärwicklung 133 in zwei Teilwicklungen mit den Windungszahlen N₂ und N₃ aufgeteilt, die mit den Wicklungsabgriffen B und C verbunden sind. Den Wicklungsabgriffen B und C sind zwei Gleichrichterdioden 134 nachgeschaltet, deren Ausgänge gemeinsam mit dem positiven Anschluss (+) der Anordnung 100 verbunden sind.

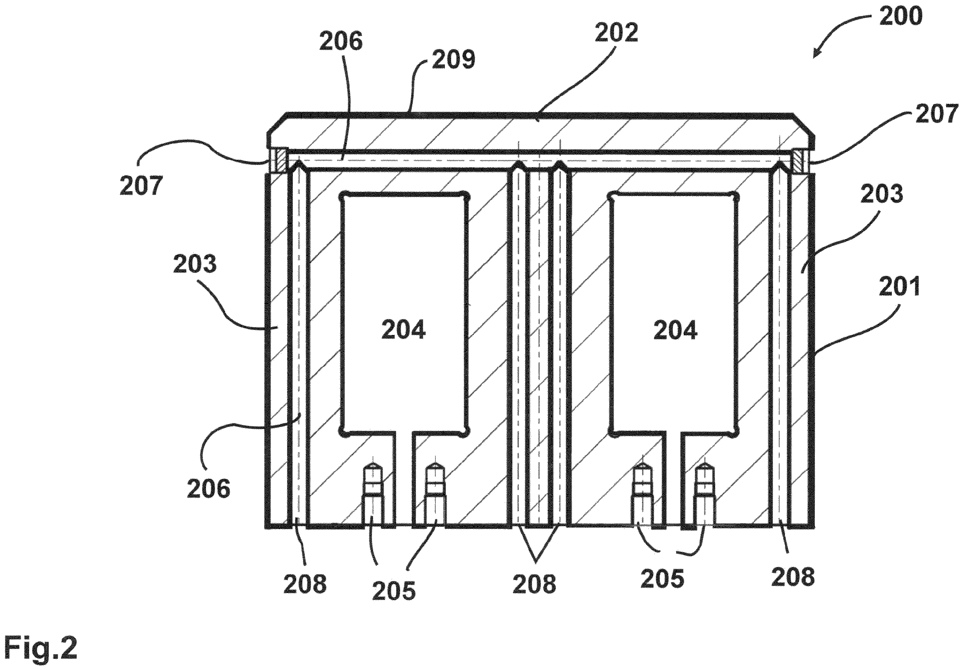

Die Sekundärwicklung 133 weist wenigstens ein bevorzugtes stromleitendes Bauteil, wie es unter Bezugnahme auf Fig. 2 detaillierter beschrieben wird, als Bestandteil auf. Ebenso weist die Primärwicklung 132 vorteilhafterweise wenigstens ein stromleitendes Bauteil als ein selbstragendes Spulenelement auf, wie es unter Bezugnahme auf Fig. 3 nachfolgend näher erläutert wird.

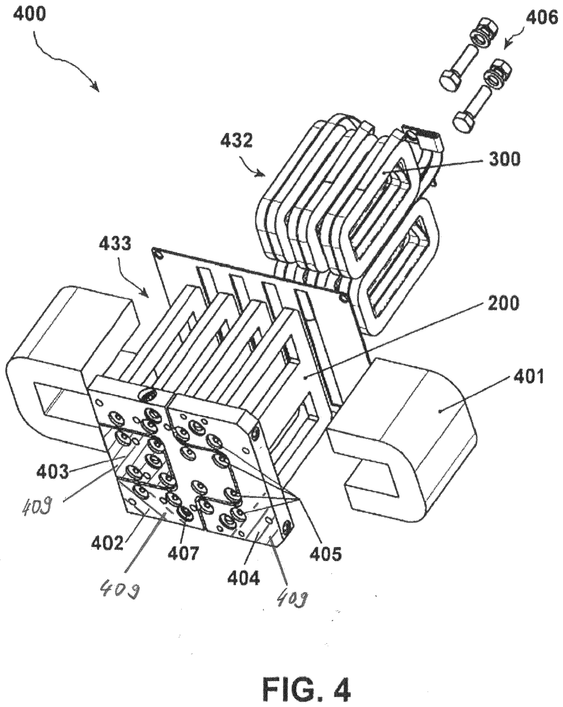

In Fig. 2 ist eine bevorzugte Ausgestaltung des Bauteils in einer ebenen Schnittansicht dargestellt und insgesamt mit 200 bezeichnet. Das Bauteil 200 besteht aus einem massiven, einstückigen Block 201, der aus Aluminium oder einer Aluminiumlegierung besteht. Das Bauteil weist eine E-förmige Ausgestaltung mit einem Rücken 202 und drei Schenkeln 203 auf. Zwischen den Schenkeln 203 befinden sich zwei Öffnungen 204, in denen bei der beschriebenen bevorzugten Ausgestaltung ein Eisenkern, wie er beispielsweise in Figur 4 mit 401 bezeichnet ist, verläuft.

Das Bauteil 200 weist Befestigungsmittel auf, die als Gewindebohrungen 205 ausgebildet sind. Mittels der bevorzugten Gewindebohrungen 205 ist eine robuste und zuverlässige Befestigung des Bauteils 200 an einem Trägerbauteil, insbesondere einem Bauteil einer Ausgangsgleichrichteranordnung, möglich. Weiterhin weist das Bauteil 200 als Bohrungen bzw. Kühlkanäle ausgebildete Hohlräume 206 zum Aufnehmen eines Kühlfluids auf. Die Bohrungen sind so im Inneren des Bauteils 200 angeordnet, dass sie eine zusammenhängende Kühlfluidleitung bzw. einen Kühlkreislauf bilden. Die Öffnungen 207 des Hohlraums 206, der längs innerhalb des Rückens 202 des Bauteils 200 verläuft und zum Verbinden der in den Schenkeln 203 verlaufenden Kühlkanäle bzw. Bohrungen vorgesehen ist, sind mit Verschlusselementen nach außen abgedichtet. Die weiteren Öffnungen 208 der Hohlräume 206 sind mit umgebenden Aussparungen zur Aufnahme von Dichtungselementen versehen und dienen als Zu- und Ableitungen für das Kühlfluid.

Das Bauteil 200 ist chemisch mit Nickel konturtreu beschichtet. Auf den inneren und äußeren Oberflächen des Bauteils 200 ist somit eine Beschichtung 209 mit Nickel vorhanden. Insbesondere ist das Bauteil im Bereich des Kühlkanals 206 - d.h. insbesondere im Inneren des Kühlkanals 206 - mit Nickel beschichtet. Die Nickelbeschichtung eignet sich besonders als Schutzschicht gegen Elektrokorrosion der Kühlkanäle 206, aber auch als Schutzschicht gegen Korrosion durch Oxidation der Oberfläche des Bauteils 200. Als weiteres Mittel zur Verhinderung der Elektrokorrosion (nicht dargestellt) ist dem Kühlfluid ein Korrosionsinhibitor zugesetzt. Solche Korrosionsinhibitoren sind im Handel erhältlich und werden z.B. in Kühlkreisläufen von Maschinen verwendet, wenn Wärmetauscher aus Aluminium eingesetzt werden. Hauptbestandteil solcher Korrosionsinhibitoren ist Ethylenglykol oder Propylenglykol. Nickel hat als Metall im Gegensatz zu Aluminiumoxid einen höheren spezifischen elektrischen als auch einen höheren spezifischen thermischen Leitwert. Erfolgt die Beschichtung insbesondere unmittelbar nach Fertigung des stromleitenden Bauteils 200 so bildet sich auf der Oberfläche des Bauteils 200 keine Schicht aus Aluminiumoxid, es entstehen somit keine höheren elektrischen Übergangswiderstände zwischen den stromleitenden Teilen 200 des Transformators 130 und auch keine höheren thermischen Übergangswiderstände im Bereich der Kühlkanäle 206. Die Verlustleistung erhöht sich nicht, die ausreichende Kühlung des Transformators ist sichergestellt.

Die Beschichtung (209) des Bauteils (200) kann auch als galvanische Beschichtung ausgeführt sein, insbesondere durch eine galvanische Nickelbeschichtung. Die Kanten weisen mit dieser Art der Beschichtung eine höhere Schichtdicke auf, die Hohlräume werden nicht beschichtet.

Denkbar ist auch eine Beschichtung (209) des Bauteils (200) durch eine kathotische Tauchbeschichtung. Dabei werden kolloidale Partikel unter Einfluss eines elektrischen Feldes auf einer Elektrode abgeschieden. Bei der kathodischen Tauchbeschichtung handelt es sich um eine besonders umweltfreundliche Methode, da als Lösungsmittel überwiegend demineralisiertes Wasser eingesetzt wird.

Weiterhin denkbar ist es, für die Beschichtung (209) des Bauteils (200) eine Kunststoffbeschichtung vorzusehen. Dabei erfolgt die Beschichtung des Bauteils (200) durch Sprüh-, oder Tauchlacke. Die Kunststoffbeschichtung weist deutlich höhere Schichtdicken auf. Der Hohlraum 206 zur Aufnahme des Kühlfluids des Bauteils 200 wird bei einer Beschichtung durch Kunststoff ebenfalls mit einer Schutzschicht 209 versehen.

Möglich ist es weiterhin, dass die Schutzbeschichtung 209 des Bauteils 200 durch eine Passivierung des Aluminiums oder der Aluminiumlegierung, insbesondere durch eine Eloxierung erfolgt. Bei dieser Art der Beschichtung wird eine Schutzschicht durch Aluminiumoxid kontrolliert erzeugt. Die Schutzschicht aus Aluminiumoxid wird durch anodische Oxidation gebildet. Die oberste Schicht des Aluminiums oder der Aluminiumlegierung wird dabei so umgewandelt, dass sich ein Oxid bildet.

Weiterhin ist eine Kombination der genannten Beschichtungsvarianten des Bauteils 200 möglich. So ist es beispielweise denkbar, die Hohlräume 206 zur Aufnahme des Kühlfluids mit einer Kunststoffbeschichtung zu versehen und anschließend das Bauteil 200 galvanisch mit Nickel zu beschichten. Alternativ oder zusätzlich kann ein Korrosionsinhibitor dem Kühlfluid zugesetzt werden. Alle zuvor beschriebenen Varianten der Beschichtung sind auch bei den im folgenden Text beschriebenen stromleitenden Bauteilen verwendbar.

In Fig. 3 ist eine bevorzugte Ausgestaltung des Bauteils in der Ausführungsform eines selbsttragenden Spulenelements 300 in einer Seitenansicht und einer Schnittansicht A-A schematisch dargestellt und insgesamt mit 300 bezeichnet.

Das Spulenelement 300 ist aus einem rechteckförmigen Leitungsband aus Aluminium oder einer Aluminiumlegierung gewickelt und besteht aus zwei gegenläufig gewickelten und nebeneinander befindlichen Wicklungen 302 und 303. Die Wicklungsachse des Spulenelements 300 verläuft durch eine Öffnung 304, durch die vorteilhafterweise ein Transformatorkern geführt wird. Das Spulenelement 300 wird von der Spulenmitte ausgehend gewickelt, wobei sowohl die erste Wicklung 302 als auch die die zweite Wicklung 303 von der Mitte ausgehend nach außen gewickelt werden, so dass sich die Stromanschlüsse 301 der jeweiligen Wicklung an der Außenseite der jeweiligen Wicklung befinden und eine einfache Zugänglichkeit bieten. Die Stromanschlüsse 301 Um den Übergangswiderstand zwischen den als Spulenelement ausgeführten Bauteilen 300 möglichst gering zu halten sind die Bauteile 300 als auch die Stromanschlüsse 301, insbesondere an den elektrischen Kontaktflächen behandelt, insbesondere mit einer Schutzschicht 309 aus Nickel versehen. Durch die Schutzschicht wird die Bildung einer Aluminiumoxidschicht verhindert, die den Übergangswiderstand zwischen Bauteilen 300 erheblich verschlechtern würde. Das Spulenelement 300 ist durch die beschriebene Ausgestaltung selbsttragend ausgeführt, wodurch auf einen Spulenkörper verzichtet werden kann. Obwohl dies hier nicht dargestellt ist, ist es durchaus denkbar auch die Spulenelemente 300 der Primärspule ähnlich wie das stromleitende Bauteil 200 aufzubauen, also einen darin angeordneten Kühlmittelkanal auszuführen. Dazu könnten z.B. in den Wicklungen 302 und 303 des oben genannten Leitungsbandes Aussparungen vorgesehen sein, die dann die Kühlkanäle bilden. Das Leitungsband kann auch vollständig beschichtet sein.

In Fig. 4 ist eine Explosionsansicht einer bevorzugten Wicklungsanordnung eines Transformators schematisch dargestellt und insgesamt mit 400 bezeichnet. Die Primärwicklung 432 der Wicklungsanordnung 400 umfasst sechs selbsttragende Spulenelemente 300. Die sechs Spulenelemente 300 der Primärwicklung 432 sind teilweise parallel und teilweise seriell verschaltet. Zum Anleger der Primärspannung U₁ sind zwei Anschlussklemmen 406 vorgesehen. Die Sekundärwicklung 433 umfasst vier E-förmige Bauteile 200, wie sie unter Bezugnahme auf Figur 2 ausführlich erläutert wurden.

Zum Zusammenbau der Wicklungsanordnung 400 wird ein Eisenkern 401 durch die Öffnungen 204 der Windungselemente 200 sowie durch die Öffnungen der Spulenelemente 300 geführt, wobei die Spulenelemente 300 und die Windungselemente 200 abwechselnd nebeneinander angeordnet und ausgerichtet sind.

Die Bauteile 200 sind an als Anschlussstücke 402, 403, 404 ausgebildeten Trägerbauteilen befestigt. Bei der dargestellten bevorzugten Ausgestaltung sind die als Windungselemente ausgeführten Bauteile 200 mittels Schrauben 405 an den Anschlussstücken 402 bis 404 angeschraubt. Die Anschlussstücke 402 bis 404 weisen dazu Öffnungen auf, durch die die Schrauben 405 geführt und in die Gewindebohrungen 205 der als Windungselemente ausgeführten Bauteile 200 eingeschraubt sind. Die Anschlussstücke 402 bis 404 weisen darüber hinaus Öffnungen 407 auf, die über vorgesehene Leitungskanäle mit den Öffnungen 208 der als Windungselemente ausgeführten Bauteile 200 verbunden sind, um einen Kühlkreislauf für das Kühlfluid zu schaffen. Die Anschlusstücke 402, 403, 404 sind mit einer Schutzschicht 409 aus Nickel versehen, zum einen um den Übergangswiderstand zu den Windungselementen 200 klein zu halten, zum anderen um die Elektrokorrosion in den Öffnungen 407 beim Durchströmen des Fluids zu verhindern.

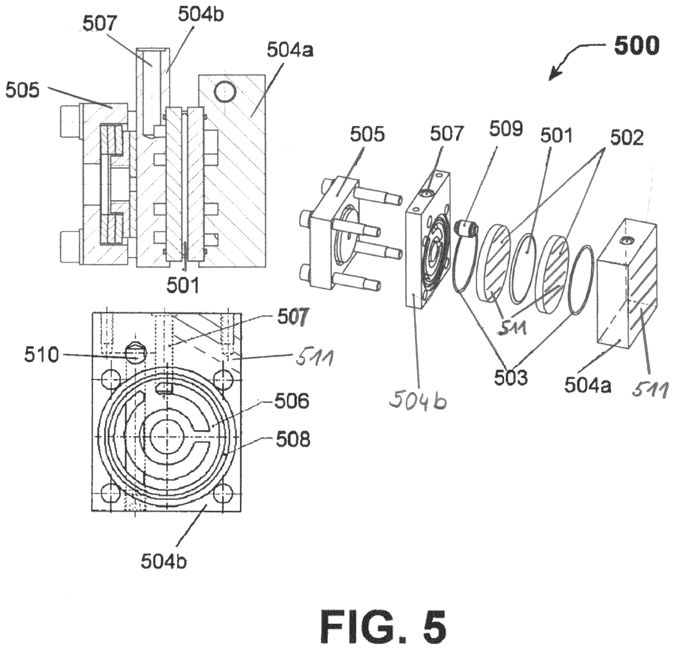

Die Anschlussstücke 402 bis 404 entsprechen den in Fig. 1 dargestellten Abgriffen A, B, C. Das Anschlussstück 402 entspricht dem Mittelabgriff A, die Anschlussstücke 403, 404 entsprechen den Wicklungsabgriffen B bzw. C. Die Anschlussstücke 402 bis 404 sind ebenfalls aus Aluminium oder einer Aluminiumlegierung gefertigt. Um den Übergangswiderstand zwischen den als Windungselement ausgeführten Bauteil 200 und den Anschlussstück 402 bis 404 möglichst gering zu halten sind die Bauteile 200 als auch die Anschlusstücke 402 bis 404, insbesondere an den elektrischen Kontaktflächen behandelt, insbesondere mit einer Schutzschicht 409 aus Nickel versehen. Durch die Schutzschicht wird die Bildung einer Aluminiumoxidschicht verhindert, die den Übergangswiderstand zwischen Bauteil 200 und Anschlussstück 402 bis 404 erheblich verschlechtern würde. Die Anschlusstücke 402 bis 404 können insbesondere Teil einer Gleichrichteranordnung sein, wie sie beispielsweise unter Bezugnahme auf Fig. 5 beschrieben wird.

In Fig. 5 ist eine bevorzugte Ausgestaltung einer Gleichrichterbaugruppe aus unterschiedlichen Ansichten dargestellt und insgesamt mit 500 bezeichnet. In der Mitte der Baugruppe 500 ist eine scheibenförmige Gleichrichterdiode 501 angeordnet, die die elektrische Funktionalität der Gleichrichterbaugruppe 500 bereitstellt. An die Diode 501 schließen sich beidseitig Kontaktplatten 502 an, die zugleich elektrische Kontakte und Kühlflächen für die Diode bilden. Die Kontaktplatten 502 sind ebenfalls aus Aluminium oder einer Aluminiumlegierung gefertigt. Sowohl um den elektrischen Übergangswiderstand als auch um den thermischen Übergangswiderstand zwischen den als Kontaktplatte 502 ausgeführten Bauteil 200 und der Gleichrichterdiode 501 möglichst gering zu halten ist die Kontaktplatte 502, insbesondere an den elektrischen Kontaktflächen und thermischen Kontaktflächen behandelt und mit einer Schutzschicht 511 aus Nickel versehen. Durch die Schutzschicht wird die Bildung einer Aluminiumoxidschicht verhindert, die den elektrischen als auch den thermischen Übergangswiderstand zwischen Kontaktplatte und Gleichrichterdiode 501 erheblich verschlechtern würde. Die Diode 501 ist somit zwischen zwei Kühlkörpern, nämlich den Kontaktplatten 502 eingespannt, die mit einem Kühlfluid das bevorzugt durch Kühlkanäle bzw. Kühlleitungen strömt, in Verbindung stehen. Dabei strömt das Kühlfluid durch Kanäle in Anschlusselementen 504a, 504b, in die die Kontaktplatten 502 eingesetzt sind. An den Kontaktplatten sind Dichtungsringe angeordnet, um ein Austreten des Kühlfluids zu verhindern. Die Dichtungsringe 503 sind in zugehörigen Nuten 508 angeordnet, die in Anschlusselemente 504a, 504b gefräst sind.

Das Anschlusselement 504b weist einen gebohrten Zu-/Ablauf 507 für das Kühlfluid auf, das in einen als Kühlleitung bzw. Kühlkanal 506 ausgebildeten Hohlraum gelangen und dort zirkulieren kann. Der Kühlkanal ist so hergestellt, dass die Fläche zwischen dem Kühlfluid und der Kontaktplatte 502 im Bereich der Anlagefläche der Diode möglichst groß ist, wobei zugleich die Verteilung der Kanäle einen möglichst geringen Einfluss auf die Gleichmäßigkeit der Stromdichte durch die Diode hat. Beim Durchfluss des Kühlfluids durch das Anschlusselement ist der Druckabfall gering, da ein möglichst großer Kanalquerschnitt und Parallelzweige vorgesehen sind. Das Kühlfluid verlässt das Anschlusselement 504b durch eine gebohrte und an der Unterseite des Anschlusselements 504b verschlossene Öffnung 510. Von der Öffnung 510 gelangt das Kühlfluid über ein Verbindungselement 509 in das Anschlusselement 504a, das ähnlich wie das Anschlusselement 504b aufgebaut ist und ebenso Kühlkanäle zum Aufnehmen und Leiten des Kühlfluids aufweist. Das Kühlfluid durchströmt das Anschlusselement 504a und erreicht anschließend über weitere dafür vorgesehene Hohlräume bzw. Kanäle die angeschlossenen Windungselemente 200.

Auch die Anschlusselemente 504a, 504b sind mit einer Beschichtung 511 aus Nickel beschichtet, zum einen um den Übergangswiderstand klein zu halten, zum anderen um eine Elektrokorrosion in den Kühlkanälen beim Durchströmen des Fluids zu verhindern.

Die Gleichrichterbaugruppe 500 weist weiterhin ein Befestigungs- und Federelement 505 auf, das dazu dient, die Baugruppe 500 zu befestigen und die Bauteile mit einer vorgebbaren Federkraft zu beaufschlagen. Damit wird eine vorgebbare schwebende Einspannung, mittels derer eine vom Diodenhersteller vorgegebene Einspannkraft für die Gleichrichterdiode 501 bereitstellbar ist, sowie ein möglichst gleichmäßiger Druck auf die Diode 501 und damit eine möglichst gleichmäßige Stromdichte durch die Diode gewährleistet.

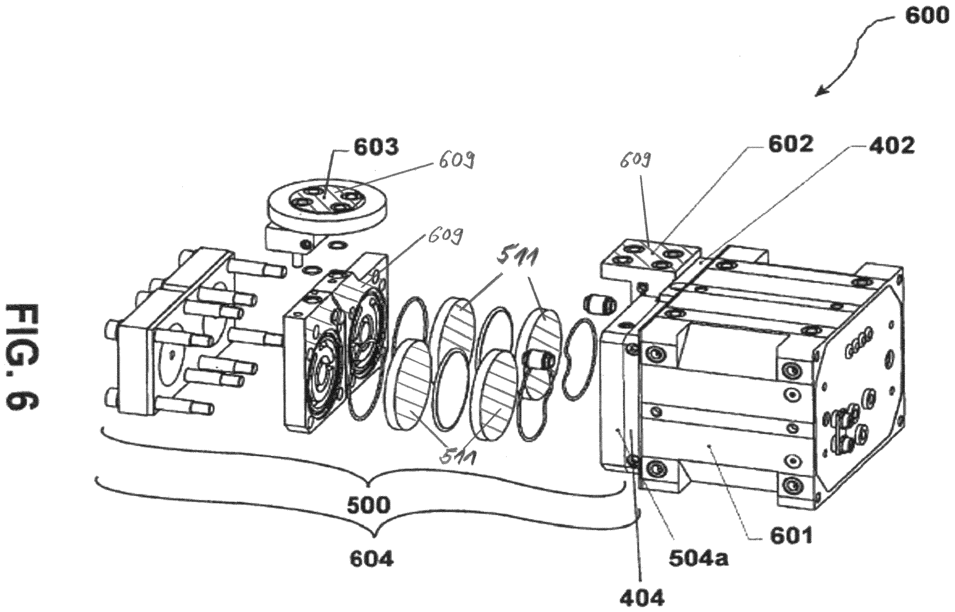

Eine bevorzugte Ausgestaltung einer Schweißtransformatoranordnung ist in Fig. 6 in zerlegter Ansicht dargestellt und insgesamt mit 600 bezeichnet. Die Transformatoranordnung weist zwei im Wesentlichen gleich aufgebaute Gleichrichterbaugruppen 500 auf, die jeweils an der rechts befindlichen Außenseite eines Anschlusselements 504a mit den Anschlussstücken 403 bzw. 404 einer Wicklungsanordnung 400 verbunden sind. Das Anschlusselement 504a ist ebenfalls aus Aluminium oder einer Aluminiumlegierung gefertigt und wie zuvor beschrieben mit der Schutzschicht 511 versehen. Durch diese Schutzschicht wird die Bildung einer Aluminiumoxidschicht verhindert, die den Übergangswiderstand zwischen Anschlusselement 504b und Anschlussstück 402 bis 404 erheblich verschlechtern würde. Die Gleichrichterbaugruppe 500 wird dadurch direkt, ohne zusätzliche Stromleitungsbänder mit der Sekundärwicklung verbunden. Die zwei Anschlusselemente 504b werden miteinander elektrisch verbunden und stellen den positiven Ausgang der Transformatoranordnung dar. Ein Transformatorgehäuse 601 ist als säulenförmiger Hohlkörper realisiert. An der in Fig. 4 rechten Außenseite des Transformatorgehäuses 601 sind die elektrischen Anschlüsse für die Primärspannung erkennbar. Innerhalb des Transformatorgehäuses 601 ist die Wicklungsanordnung 400 gemäß Fig. 4 angeordnet. Die Wicklungsanordnung 400 ist fast vollständig innerhalb des Gehäuses 601 angeordnet, so dass außenseitig nur die Anschlussstücke 402 und 404 sichtbar sind.

Das Anschlussstück 402 stellt den Mittelabgriff A der Sekundärwicklung dar und ist mit der Anschlussplatte 602, die den negativen Anschluss des Transformators 600 darstellt, verbunden. Die Anschlussplatte 602 für den negativen Anschluss des Transformators ist aus Aluminium oder einer Aluminiumlegierung gefertigt, mit einer Schutzschicht versehen, um die Bildung einer Aluminiumoxidschicht zu verhindern und kann auch Kühlkanäle enthalten.

Die Anschlussstücke 404 (sichtbar) und 403 (nicht sichtbar) sind jeweils mit einer Gleichrichterbaugruppe 500 verbunden, wie sie in Fig. 5 näher erläutert wurde. Die beiden Anschlusselemente 504b der beiden Gleichrichterbaugruppen 500 sind gemeinsam mit einer Anschlussplatte 603 verbunden, die den positiven Ausgangsanschluss des Transformators 600 darstellt.

Die Anschlussplatte 603 für den positiven Ausgangsanschluss des Transformator 600 ist aus Aluminium oder einer Aluminiumlegierung gefertigt, mit einer Schutzschicht versehen, um die Bildung einer Aluminiumoxidschicht zu verhindern und kann auch Kühlkanäle enthalten.

Die Anschlussstücke 402 bis 404 stellen zusammen mit den beiden Gleichrichterbaugruppen 500 und optional den Anschlussplatten 602, 603 eine Ausgangsgleichrichteranordnung 604 dar.

Die gesamte Transformatoranordnung 600 einschließlich der Ausgangsgleichrichteranordnung 604 ist vorteilhafterweise durch Verschraubung zusammengebaut, was unter einem zeitlichen Aspekt erhebliche Vorteile bei der Herstellung bietet, insbesondere würde eine geschweißte Konstruktion die Beschichtung zerstören und die mechanischen und elektrischen Eigenschaften verschlechtern und eine Nachbehandlung erfordern. Auch ist das Verschweißen von Aluminium ein technologisch äußerst anspruchsvoller Prozess. Eine Verschraubung bietet hier erhebliche Vorteile.

Es versteht sich, dass in den dargestellten Figuren nur besonders bevorzugte Ausführungsformen der Erfindung dargestellt sind. Daneben sind im Rahmen dieser Erfindung andere Ausführungsformen denkbar.

Die vorliegende Erfindung betrifft eine Transformatoranordnung nach Anspruch 1.

### Bezugszeichenliste

- 100: Transformatoranordnung
- 110: Primärkreis
- 120: Sekundärkreis
- 130: Transformator
- 131: Transformatorkern
- 132: Primärwicklung
- 133: Sekundärwicklung
- 134: Gleichrichterdiode

- 200: Bauteil
- 201: Aluminiumblock
- 202: Rücken
- 203: Schenkel
- 204: Öffnung
- 205: Gewindebohrung
- 206: Hohlraum
- 207,208: Öffnung
- 209: Beschichtung

- 300: Spulenelement
- 301: Stromanschluss mit Beschichtung
- 302, 303: Wicklung
- 304: Öffnung
- 309: Beschichtung

- 400: Wicklungsanordnung
- 402, 403, 404: Anschlussstück mit Beschichtung
- 405: Schraube
- 406: Anschlussklemme
- 407: Öffnung
- 409: Beschichtung
- 432: Primärwicklung
- 433: Sekundärwicklung

- 500: Gleichrichterbaugruppe
- 501: Halbleiterbauteil
- 502: Kontaktplatte mit Beschichtung
- 503: Dichtungsring
- 504a, 504b: Anschlusselement mit Beschichtung
- 505: Befestigungs- und Federelement
- 506: Kühlkanal mit Beschichtung
- 507: Zu-/Ablauf mit Beschichtung
- 508: Nut
- 509: Verbindungselement
- 510: Öffnung
- 511: Beschichtung

- 600: Schweißtransformatoranordnung
- 601: Transformatorgehäuse
- 602: Anschlussplatte (-) mit Beschichtung
- 603: Anschlussplatte (+) mit Beschichtung
- 604: Ausgangsgleichrichteranordnung
- 609: Beschichtung

## Patentansprüche

1. Transformatoranordnung (100; 600) mit
einem Schweißtransformator (130), der eine Primärwicklung (132) und eine Sekundärwicklung (133; 409) aufweist und in dem zumindest eine Spulenwindung mit einem stromleitenden Bauteil als Bestandteil der Sekundärwicklung (133) angeordnet ist, wobei das stromleitende Bauteil (200) aus Aluminium oder einer Aluminiumlegierung besteht, wobei das stromleitende Bauteil (200) einen in seinem Inneren ausgebildeten Hohlraum (206) zum Aufnehmen eines Kühlfluids besitzt, und wobei mindestens ein Mittel zum Schutz des stromleitenden Bauteils (200) vor Korrosion, insbesondere zum Schutz vor einer Korrosion durch das Kühlfluid, vorgesehen ist,
Anschlussstücken (402, 403, 404), welche als Trägerbauteile der Spulenwindung der Sekundärwicklung (133) ausgebildet sind, wobei die Anschlussstücke (402, 403, 404) aus Aluminium oder einer Aluminiumlegierung bestehen und eine Beschichtung (409) aufweisen, und
zwei Gleichrichterbaugruppen (500), wobei eine Gleichrichterbaugruppe (500) mit wenigstens einem der Anschlussstücke (402, 403, 404) elektrisch verbunden ist und eine erste Anschlussplatte (603) für eine gleichgerichtete Ausgangsspannung aufweist, wobei eine zweite Anschlussplatte (602) mit einem der Anschlussstücke (402) verbunden ist, wobei mindestens eine der Anschlussplatten (602, 603) eine Beschichtung (609) aufweist,
wobei die Anschlussstücke (402, 403, 404) zusammen mit zwei Gleichrichterbaugruppen (500) und optional den Anschlussplatten (602, 603) eine Ausgangsgleichrichteranordnung (604) darstellen,
wobei Öffnungen (208) des Hohlraums (206) im Inneren des stromleitenden Bauteils (200) über Leitungskanäle mit Öffnungen (407) der Anschlussstücke (402, 403, 404) verbunden sind,
wobei die gesamte Transformatoranordnung (100; 600) einschließlich der Ausgangsgleichrichteranordnung (604) durch Verschraubung zusammengebaut ist,
wobei die Beschichtung (409) der Anschlussstücke (402, 403, 404) Nickel ist und eine Beschichtung (309) an elektrischen Kontaktflächen des stromleitenden Bauteils (200) Nickel ist, so dass die Bildung einer Aluminiumoxidschicht zwischen den Anschlussstücken (402, 403, 404) und dem stromleitenden Bauteil (200) verhindert wird, und
wobei eine Beschichtung im Inneren des stromleitenden Bauteils (200) Nickel und/oder Aluminiumoxid ist, wobei das mindestens eine Mittel zum Schutz des stromleitenden Bauteils vor Korrosion die Beschichtung (309) an den elektrischen Kontaktflächen und die Beschichtung im inneren des stromleitenden Bauteils umfasst.

2. Transformatoranordnung (100; 600) nach Anspruch 1, wobei das mindestens eine Mittel zum Schutz des stromleitenden Bauteils vor Korrosion eine weitere Schutzbeschichtung (209) mindestens eines Teilabschnitts des Bauteils (200) umfasst.

3. Transformatoranordnung (100; 600) nach Anspruch 1 oder 2, wobei die Beschichtung an den elektrischen Kontaktflächen und im Inneren des stromleitenden Bauteils (200) sowie in den Öffnungen (407) der Anschlussstücke (402, 403, 404) Nickel ist.

4. Transformatoranordnung (100; 600) nach einem der vorangehenden Ansprüche, wobei das stromleitende Bauteil (200) und die Anschlussstücke (402, 403, 404) auf den inneren und äußeren Oberflächen mit Nickel beschichtet sind.

5. Transformatoranordnung (100; 600) nach Anspruch 3 oder Anspruch 4, wobei die Beschichtung (209) mit Nickel als eine chemische Nickelbeschichtung ausgeführt ist.

6. Transformatoranordnung (100; 600) nach Anspruch 1 oder Anspruch 2, wobei die Beschichtung (209) auf den äußeren Oberflächen des stromleitenden Bauteils (200) als eine galvanische Beschichtung ausgeführt ist.

7. Transformatoranordnung (100; 600) nach Anspruch 6, wobei das stromleitende Bauteil (200) außen mit Nickel beschichtet ist und die im Inneren ausgebildeten Hohlräume (206) des stromleitenden Bauteils (200) nicht mit Nickel beschichtet sind.

8. Transformatoranordnung (100; 600) nach Anspruch 6 oder 7, wobei Kanten des stromleitenden Bauteils (200) eine höhere Schichtdicke als die Oberfläche des stromleitenden Bauteils (200) aufweisen.

9. Transformatoranordnung (100; 600) nach Anspruch 7 oder Anspruch 8, wobei die Beschichtung (209) mit Aluminiumoxid der im Inneren ausgebildeten Hohlräume (206) des stromleitenden Bauteils (200) und/oder in den Öffnungen (407) der Anschlussstücke (402, 403, 404) als eine Passivierung des Aluminiums oder der Aluminiumlegierung, insbesondere eine Eloxierung, und/oder insbesondere als eine durch Passivierung kontrolliert erzeugte Schutzschicht, ausgeführt ist.

10. Transformatoranordnung (100; 600) nach einem der vorhergehenden Ansprüche, wobei das mindestens eine Mittel zum Schutz des stromleitenden Bauteils vor Korrosion zusätzlich einen Korrosionsinhibitor im Kühlfluid umfasst.

11. Transformatoranordnung (100; 600) nach einem der vorhergehenden Ansprüche, wobei der im Inneren des Bauteils (200) ausgebildete Hohlraum (206) Kanäle, insbesondere Bohrungen (206) angeordnet zur Durchströmung des Bauteils (200) mit Kühlmittel, umfasst.

12. Transformatoranordnung (100; 600) nach einem der vorhergehenden Ansprüche,
wobei mindestens eines der Anschlussstücke (402, 403, 404) als stromleitendes Bauteil ausgebildet ist, und/oder
wobei wenigstens eine Windung der Primärwicklung (132) eine Beschichtung (309) aufweist und wenigstens eine Windung der Primärwicklung (132) als stromleitendes Bauteil ausgebildet ist.

13. Transformatoranordnung (100; 600) nach einem der vorangehenden Ansprüche, wobei die Gleichrichterbaugruppe (500) mindestens eine Gleichrichterdiode (501) mit Anschlusselementen (504a, 504b) umfasst, wobei ein erstes Anschlusselement (504a) dazu angeordnet ist, die Sekundärwicklung (133, 409) elektrisch mit der mindestens einen Gleichrichterdiode (501) zu verbinden und ein zweites Anschlusselement (504b) dazu angeordnet ist, die Gleichrichterdiode (501) mit der Anschlussplatte (603) zu verbinden, wobei wenigstens ein Anschlusselement (504a, 504b) eine Beschichtung (511) aufweist, wobei insbesondere wenigstens ein Anschlusselement (504a, 504b) als ein stromleitendes Bauteil ausgeführt ist.

14. Transformatoranordnung (100; 600) nach einem der vorangehenden Ansprüche, **dadurch gekennzeichnet, dass** die Transformatoranordnung als ein MF-Transformator ausgebildet ist, welcher mit einer PWMmodulierten Spannung im Frequenzbereich von 500 Hz bis 5000 Hz an seiner Primärwicklung (132) angesteuert ist.

15. Transformatoranordnung (100; 600) nach Anspruch 14, **dadurch gekennzeichnet, dass** der MF-Transformator ein Schweißtransformator, geeignet für das Widerstandsschweißen ist.

## Claims

1. Transformer arrangement (100; 600) comprising a welding transformer (130), which has a primary winding (132) and a secondary winding (133; 409) and in which is arranged at least one coil turn with a current-conducting component as part of the secondary winding (133), wherein the current-conducting component (200) consists of aluminium or an aluminium alloy, wherein the current-conducting component (200) has a cavity (206) formed in its interior for receiving a cooling fluid, and wherein at least one means for protecting the current-conducting component (200) against corrosion, in particular for protection against corrosion caused by the cooling fluid, is provided,
connection pieces (402, 403, 404) embodied as carrier components of the coil turn of the secondary winding (133), wherein the connection pieces (402, 403, 404) consist of aluminium or an aluminium alloy and have a coating (409), and
two rectifier assemblies (500), wherein a rectifier assembly (500) is electrically connected to at least one of the connection pieces (402, 403, 404) and has a first connection plate (603) for a rectified output voltage, wherein a second connection plate (602) is connected to one of the connection pieces (402), wherein at least one of the connection plates (602, 603) has a coating (609), wherein the connection pieces (402, 403, 404) together with two rectifier assemblies (500) and optionally the connection plates (602, 603) constitute an output rectifier arrangement (604),
wherein openings (208) of the cavity (206) in the interior of the current-conducting component (200) are connected to openings (407) of the connection pieces (402, 403, 404) via conduit channels,
wherein the entire transformer arrangement (100; 600) including the output rectifier arrangement (604) is assembled by being screwed together,
wherein the coating (409) of the connection pieces (402, 403, 404) is nickel and a coating (309) on electrical contact surfaces of the current-conducting component (200) is nickel, with the result that the formation of an aluminium oxide layer between the connection pieces (402, 403, 404) and the current-conducting component (200) is prevented, and
wherein a coating in the interior of the current-conducting component (200) is nickel and/or aluminium oxide, wherein the at least one means for protecting the current-conducting component against corrosion comprises the coating (309) on the electrical contact surfaces and the coating in the interior of the current-conducting component.

2. Transformer arrangement (100; 600) according to Claim 1, wherein the at least one means for protecting the current-conducting component against corrosion comprises a further protective coating (209) of at least one portion of the component (200).

3. Transformer arrangement (100; 600) according to Claim 1 or 2, wherein the coating on the electrical contact surfaces and in the interior of the current-conducting component (200) and also in the openings (407) of the connection pieces (402, 403, 404) is nickel.

4. Transformer arrangement (100; 600) according to any of the preceding claims, wherein the current-conducting component (200) and the connection pieces (402, 403, 404) are coated with nickel on the inner and outer surfaces.

5. Transformer arrangement (100; 600) according to Claim 3 or Claim 4, wherein the coating (209) with nickel is embodied as a chemical nickel coating.

6. Transformer arrangement (100; 600) according to Claim 1 or Claim 2, wherein the coating (209) on the outer surfaces of the current-conducting component (200) is embodied as an electrolytic coating.

7. Transformer arrangement (100; 600) according to Claim 6, wherein the current-conducting component (200) is coated with nickel on the outside and the cavities (206) formed in the interior of the current-conducting component (200) are not coated with nickel.

8. Transformer arrangement (100; 600) according to Claim 6 or 7, wherein edges of the current-conducting component (200) have a higher layer thickness than the surface of the current-conducting component (200).

9. Transformer arrangement (100; 600) according to Claim 7 or Claim 8, wherein the coating (209) with aluminium oxide of the cavities (206) formed in the interior of the current-conducting component (200) and/or in the openings (407) of the connection pieces (402, 403, 404) is embodied as a passivation of the aluminium or of the aluminium alloy, in particular an anodization, and/or in particular as a protective layer produced in controlled fashion by passivation.

10. Transformer arrangement (100; 600) according to any of the preceding claims, wherein the at least one means for protecting the current-conducting component against corrosion additionally comprises a corrosion inhibitor in the cooling fluid.

11. Transformer arrangement (100; 600) according to any of the preceding claims, wherein the cavity (206) formed in the interior of the component (200) comprises channels, in particular drilled holes (206) arranged to allow coolant to flow through the component (200).

12. Transformer arrangement (100; 600) according to any of the preceding claims, wherein at least one of the connection pieces (402, 403, 404) is embodied as a current-conducting component, and/or
wherein at least one turn of the primary winding (132) has a coating (309) and at least one turn of the primary winding (132) is embodied as a current-conducting component.

13. Transformer arrangement (100; 600) according to any of the preceding claims, wherein the rectifier assembly (500) comprises at least one rectifier diode (501) with connection elements (504a, 504b), wherein a first connection element (504a) is arranged to electrically connect the secondary winding (133, 409) to the at least one rectifier diode (501) and a second connection element (504b) is arranged to connect the rectifier diode (501) to the connection plate (603), wherein at least one connection element (504a, 504b) has a coating (511), wherein in particular at least one connection element (504a, 504b) is embodied as a current-conducting component.

14. Transformer arrangement (100; 600) according to any of the preceding claims, **characterized in that** the transformer arrangement is embodied as an MF transformer which is controlled with a PWM-modulated voltage in the frequency range of 500 Hz to 5000 Hz at its primary winding (132).

15. Transformer arrangement (100; 600) according to Claim 14, **characterized in that** the MF transformer is a welding transformer, suitable for resistance welding.

## Revendications

1. Ensemble formant transformateur (100 ; 600) comprenant
un transformateur de soudage (130) qui comporte un enroulement primaire (132) et un enroulement secondaire (133 ; 409) et dans lequel au moins une spire pourvue d'un composant conducteur de courant est disposée en tant que partie de l'enroulement secondaire (133), le composant conducteur de courant (200) étant en aluminium ou en un alliage d'aluminium, le composant conducteur de courant (200) possédant une cavité (206) formée à l'intérieur de celui-ci et destinée à recevoir un fluide de refroidissement, et au moins un moyen étant prévu pour protéger le composant conducteur de courant (200) contre la corrosion, en particulier contre la corrosion par le fluide de refroidissement,
des pièces de raccordement (402, 403, 404) qui sont conçues comme des composants de support de la spire de l'enroulement secondaire (133), les pièces de raccordement (402, 403, 404) étant en aluminium ou en un alliage d'aluminium et comportant un revêtement (409), et
deux blocs redresseurs (500), un bloc redresseur (500) étant relié électriquement à au moins une des pièces de raccordement (402, 403, 404) et comportant une première plaque de raccordement (603) destinée à une tension de sortie redressée, une deuxième plaque de raccordement (602) étant reliée à une des pièces de raccordement (402), au moins une des plaques de raccordement (602, 603) comportant un revêtement (609),
les pièces de raccordement (402, 403, 404) représentant conjointement avec deux blocs redresseurs (500) et éventuellement les plaques de raccordement (602, 603) un ensemble formant redresseur de sortie (604),
des ouvertures (208) de la cavité (206) ménagée à l'intérieur du composant conducteur de courant (200) étant reliées à des ouvertures (407) des pièces de raccordement (402, 403, 404) par le biais des canaux de ligne,
tout l'ensemble formant transformateur (100 ; 600) y compris l'ensemble formant redresseur de sortie (604) étant assemblé par vissage,
le revêtement (409) des pièces de raccordement (402, 403, 404) étant du nickel et un revêtement (309) au niveau de surfaces de contact électrique du composant conducteur de courant (200) étant du nickel de sorte que la formation d'une couche d'oxyde d'aluminium entre les pièces de raccordement (402, 403, 404) et le composant conducteur de courant (200) est empêchée, et
un revêtement à l'intérieur du composant conducteur de courant (200) étant du nickel et/ou de l'oxyde d'aluminium, l'au moins un moyen de protection du composant conducteur de courant contre la corrosion comprenant le revêtement (309) au niveau des surfaces de contact électrique et du revêtement à l'intérieur du composant conducteur de courant.

2. Ensemble formant transformateur (100 ; 600) selon la revendication 1, l'au moins un moyen de protection du composant conducteur de courant contre la corrosion comprenant un autre revêtement de protection (209) d'au moins une portion du composant (200).

3. Ensemble formant transformateur (100 ; 600) selon la revendication 1 ou 2, le revêtement situé au niveau des surfaces de contact électrique et à l'intérieur du composant conducteur de courant (200) et dans les ouvertures (407) des pièces de raccordement (402, 403, 404) étant du nickel.

4. Ensemble formant transformateur (100 ; 600) selon l'une des revendications précédentes, le composant conducteur de courant (200) et les pièces de raccordement (402, 403, 404) étant revêtus de nickel sur les surfaces intérieures et extérieures.

5. Ensemble formant transformateur (100 ; 600) selon la revendication 3 ou la revendication 4, le revêtement (209) de nickel étant effectué sous la forme d'un revêtement de nickel par voie chimique.

6. Ensemble formant transformateur (100 ; 600) selon la revendication 1 ou la revendication 2, le revêtement (209) sur les surfaces extérieures du composant conducteur de courant (200) étant effectué sous la forme d'un revêtement galvanique.

7. Ensemble formant transformateur (100 ; 600) selon la revendication 6, le composant conducteur de courant (200) étant revêtu extérieurement de nickel et les cavités (206) formées à l'intérieur du composant conducteur de courant (200) n'étant pas revêtues de nickel.

8. Ensemble formant transformateur (100 ; 600) selon la revendication 6 ou 7, les bords du composant conducteur de courant (200) ayant une épaisseur de couche supérieure à celle de la surface du composant conducteur de courant (200).

9. Ensemble formant transformateur (100 ; 600) selon la revendication 7 ou la revendication 8, le revêtement (209) avec de l'oxyde d'aluminium effectué dans les cavités (206) formées à l'intérieur du composant conducteur de courant (200) et/ou dans les ouvertures (407) des pièces de raccordement (402, 403, 404) étant réalisé en tant que passivation de l'aluminium ou de l'alliage d'aluminium, notamment anodisation, et/ou en particulier en tant que couche de protection réalisée de manière commandée par passivation.

10. Ensemble formant transformateur (100 ; 600) selon l'une des revendications précédentes, l'au moins un moyen de protection du composant conducteur de courant contre la corrosion comprenant en outre un inhibiteur de corrosion dans le fluide de refroidissement.

11. Ensemble formant transformateur (100 ; 600) selon l'une des revendications précédentes, la cavité (206) formée à l'intérieur du composant (200) comprenant des canaux, notamment des alésages (206) disposés de manière à permettre l'écoulement du fluide de refroidissement à travers le composant (200).

12. Ensemble formant transformateur (100 ; 600) selon l'une des revendications précédentes,
l'une au moins des pièces de raccordement (402, 403, 404) étant réalisée sous la forme d'un composant conducteur de courant, et/ou
au moins une spire de l'enroulement primaire (132) comportant un revêtement (309) et au moins une spire de l'enroulement primaire (132) étant conçue comme un composant conducteur de courant.

13. Ensemble formant transformateur (100 ; 600) selon l'une des revendications précédentes, le bloc redresseur (500) comprenant au moins une diode redresseuse (501) pourvue d'éléments de raccordement (504a, 504b), un premier élément de raccordement (504a) étant disposé de manière à relier l'enroulement secondaire (133, 409) électriquement à l'au moins une diode de redressement (501) et un deuxième élément de raccordement (504b) étant disposé de manière à relier la diode de redressement (501) à la plaque de raccordement (603), au moins un élément de raccordement (504a, 504b) comportant un revêtement (511), en particulier au moins un élément de raccordement (504a, 504b) étant réalisé sous la forme d'un composant conducteur de courant.

14. Ensemble formant transformateur (100 ; 600) selon l'une des revendications précédentes, **caractérisé en ce que** l'ensemble formant transformateur est réalisé sous la forme d'un transformateur MF qui est commandé avec une tension modulée PWM dans la plage de fréquences de 500 Hz à 5000 Hz au niveau de son enroulement primaire (132) .

15. Ensemble formant transformateur (100 ; 600) selon la revendication 14, **caractérisé en ce que** le transformateur MF est un transformateur de soudage adapté au soudage par résistance.
